# EUROPÄISCHE PATENTSCHRIFT

(11) **EP 2 380 152 B1**
(45) Veröffentlichungstag und Bekanntmachung des Hinweises auf die Patenterteilung: **16.04.2014**
(21) Anmeldenummer: 09774843.8
(22) Anmeldetag: 12.12.2009
(51) Int. Cl.: G07F 15/02

(54) **VERFAHREN ZUR HERSTELLUNG VON 3,7-DIAZA-BICYCLOÝ3.3.1¨NONAN-METALL-KOMPLEXEN**
METHOD FOR PRODUCING 3,7-DIAZA-BICYCLOÝ3.3.1¨NONANE METAL COMPLEXES
PROCÉDÉ DE FABRICATION DE COMPLEXES DE 3,7-DIAZA-BICYCLOÝ3.3.1¨NONANE-MÉTAL

(30) Priorität: 19.12.2008 DE 102008064009
(43) Veröffentlichungstag der Anmeldung: 26.10.2011
(73) Patentinhaber: Clariant Finance (BVI) Limited, Road Town, Tortola (VG)
(72) Erfinder: SAJITZ, Melanie, 58840 Plettenbeger (DE); DUECKER, Barbara, 55122 Mainz (DE); WESSLING, Michael, 79400 Kandern (DE)
(74) Vertreter: Ackermann, Joachim
(86) Internationale Anmeldenummer: PCT/EP2009/008907
(87) Internationale Veröffentlichungsnummer: WO 2010/069524

(56) Entgegenhaltungen:
- EP-A2- 0 909 809
- BORZEL H ET AL: "Iron coordination chemistry with tetra-, penta- and hexadentate bispidine-type ligands" INORGANICA CHIMICA ACTA, ELSEVIER BV, NL, Bd. 337, 1. Januar 2002 (2002-01-01), Seiten 407-419, XP002400781 ISSN: 0020-1693

## Beschreibung

3,7-Diaza-bicyclo[3.3.1]nonan-Liganden der Formel (1) stellen interessante Verbindungen für verschiedene Anwendungen dar. Unter anderem sind deren Übergangmetallkomplexe sehr effektive Bleich- und Oxidationskatalysatoren.

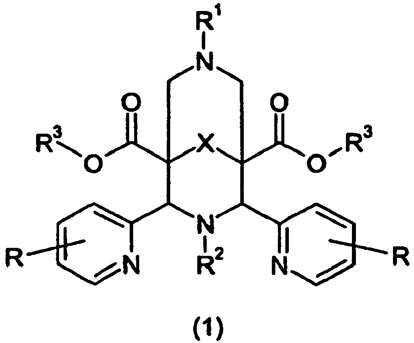

Deren Verwendung als Bleichkatalysator in Wasch- und Reinigungsmittel wird u. a. in WO 02/48301, US 2003/0 162 681 und WO 03/104 234 beansprucht.

Die Herstellung dieser Eisenkomplexe wird u. a. in Inorg. Chimica Acta, 337 (2002) 407 - 419 im Labormaßstab beschrieben. Patentanmeldungen wie EP 0765381, EP 0909809 und WO 02/48301 zeigen ebenfalls die Synthese dieser Metallkomplexe.

Diese bekannten Synthesen erfolgen durch Umsetzung des jeweiligen Liganden mit einem Metallsalz in einem organischen Lösungsmittel wie Acetonitril. Dabei wird unter Argon oder Stickstoff und wasserfreien Bedingungen gearbeitet. Die Ausbeuten sind dabei nur moderat und liegen zwischen 40 und 70 %. Das beschriebene Syntheseverfahren erfordert für die Isolierung des Endproduktes hohe Lösemittelzusätze zur Reinigung, wie z. B. Methanol, Essigester, Aceton oder Dichlormethan. Die Wahl der Lösungsmittel und die streng wasserfreien Bedingungen (wasserfreie Lösungsmittel, Argon- oder Stickstoff-Überlagerung der Reaktion) führen zu Problemen und Verteuerung bei der großtechnischen Umsetzung.

Die Aufgabe der vorliegenden Erfindung besteht darin, ein verbessertes und vereinfachtes Verfahren zur Herstellung dieser Metallkomplexe zu finden. Überraschenderweise wurde nun gefunden, dass man die Umsetzung von Ligand und Metallsalz in wässriger Lösung oder Suspension durchführen kann, wobei man in hohen Ausbeuten und Reinheiten zu den gewünschten Metallkomplexen gelangt.

Gegenstand der Erfindung ist somit ein Verfahren zur Herstellung von 3,7-Diazabicyclo[3.3.1]nonan-Metall-Komplexen der Formel (2)

[MₐLₖZₙ]Yₘ (2)

in der M folgende Metalle repräsentiert: Mn(II)-(III)-(IV), Cu(I)-(II)-(III), Fe(II)-(III)-(IV)-(V) und Co(I)-(II)-(III);
L ist ein Ligand der Formel (1) bzw. seine protonierte oder deprotonierte Form wobei R Wasserstoff, Hydroxyl, C₁-C₄ Alkyl; R¹ C₁-C₄ Alkyl, C₆-C₁₀ Aryl, Pyridinyl-C₁-C₄-alkyl, (CH₂)ₙ₁N(CH₃)₂ (n1 ist 1 -10); R²C₁-C₄ Alkyl, C₆-C₁₀ Aryl; R³ C₁-C₄ Alkyl, X C=O oder C(OH)₂darstellen kann, 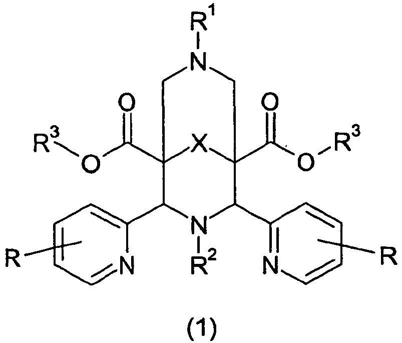
Z ist eine koordinierende Verbindung ausgewählt aus mono, bi oder tri geladenen Anionen oder neutralen Molekülen, die an ein Metall mono, bi oder tridentat koordinieren können, wie z. B.: OH⁻, NO₃⁻, NO, S²⁻, RS⁻, PO₄³⁻, H₂O, CO₃²⁻, ROH, Cl⁻, Br⁻, CN⁻, ClO₄⁻, RCOO⁻, SO₄²⁻;
Y ist ein die Ladung des Komplexes ausgleichendes Anion;
a ist eine ganze Zahl von 1 bis 10, bevorzugt von 1 bis 4;
k ist eine ganze Zahl von 1 bis 10;
n ist eine ganze Zahl von 1 bis 10, bevorzugt von 1 bis 4;
m ist eine ganze Zahl von 1 bis 20, bevorzugt von 1 bis 8.

Das Gegenion Y in Fomel (2) gleicht die Ladung z des Komplexes, der durch den Liganden L, das Metall M und die koordinierende Spezies Z entsteht, aus. Bevorzugte Gegenionen sind z. B. RSO₄⁻, SO₄²⁻, NO₃⁻, Cl⁻, Br⁻, I⁻, ClO₄⁻, BF₄⁻, PF₆⁻, RSO₃⁻.

Das erfindungsgemäße Verfahren besteht ganz allgemein darin, dass der Ligand in Wasser gelöst oder suspendiert, vorzugsweise suspendiert, wird und mit einem Metallsalz komplexiert wird. Das Metallsalz enthält als Metall ein Metall M und als Anion ein Anion Y. Als Metallsalz wird vorzugsweise ein Metall(II)-Salz und besonders bevorzugt Fe(II)-chlorid verwendet. Besonders bevorzugt ist die Herstellung der Verbindung Eisen (1+), chloro[dimethyl 9,9-dihydroxy-3-methyl-2,4-di (2-pyridinyl- κN)-7-[(2-pyridinyl-κN)methyl]-3,7-diazabicyclo[3.3.1]nonane-1,5-dicarboxylate-κN3, κn7]-, chlorid (1:1).

Zur Komplexierung des Liganden L wird das Metallsalz vorzugsweise entweder als Feststoff oder als wässrige Metallsalz-Lösung zu der wässrigen Lösung oder Suspension des Liganden L zugegeben.

Das erfindungsgemäße Verfahren wird vorzugsweise bei Raumtemperatur durchgeführt.

Die Synthese erfolgt, vorzugsweise in der Weise, dass der Ligand (1) in Wasser innerhalb von 30 bis 60 Minuten unter starker Durchmischung suspendiert wird und unter Rühren mit einer äquimolaren Menge wässriger Eisen(II)-Salz-Lösung mit einer Konzentration von vorzugsweise 30 Gew.-% Fe(II)-Salz versetzt wird. Das Gewichtsverhältnis von Wasser zu Ligand beim Lösevorgang beträgt dabei ungefähr 4:1 bis 1:1, vorzugsweise 1,6:1. Das Molverhältnis Ligand zu Eisen(II)-salz beträgt ca. 0,9:1,2 bis 1,2:0,9, vorzugsweise 1:1,05. Nachdem 3 bis 5 Stunden bei Raumtemperatur gerührt wurde, wird die Lösung durch Sprühgranulierung oder Filtration und Trocknung isoliert. Die Ausbeute beträgt ca. 98 % bei einer Reinheit von 95 - 98 %.

Das erfindungsgemäße Verfahren findet in Wasser statt. Im Vergleich zu den Verfahren gemäß dem Stand der Technik erzielt man bei dem erfindungsgemäßen Verfahren eine höhere Ausbeute. Außerdem arbeitet das erfindungsgemäße Verfahren durch den Verzicht auf organische Lösungsmittel erheblich kostengünstiger.

Nachfolgende Beispiele sollen die Erfindung näher erläutern ohne sie darauf einzuschränken.

### Beispiele

### Beispiel 1:

In einen Reaktionskessel wurden 33,6 kg (2.000 mol) Wasser und 20,6 kg (40 mol) 2,4di-(2-pyridyl)-3-methyl-7-(pyridin-2-ylmethyl)-3,7-diazabicyclo[3.3.1]nonan.9-one-1,5-dimethyl-dicarboxylate (N2Py3o) eingefüllt und innerhalb von 30 Minuten zu einer homogenen Lösung verrührt. Das Reaktionsgefäß wurde geschlossen und mit Stickstoff befüllt. Nach Inertisierung mit Stickstoff wurden 17 kg (40,6 mol) wässrige Eisen(II)-chloridlösung (30,2 %ig) innerhalb von 30 Minuten zugegeben und der Zutropftrichter mit 5 kg Wasser nachgewaschen. Die Reaktionslösung wurde bei Raumtemperatur fünf Stunden gerührt und dann getrocknet, vorzugsweise über Sprühtrocknungsverfahren. Man erhielt auf diese Weise die Verbindung mit der Bezeichnung Eisen (1+), chloro[dimethyl 9,9-dihydroxy-3-methyl-2,4-di (2-pyridinyl- κN)-7-[(2-pyridinyl-κN)methyl]-3,7-diazabicyclo[3.3.1]nonane-1,5-dicarboxylate-κN3, κn7]-, chlorid (1:1).

Das Produkt wurde als gelbes Pulver in einer Reinheit von > 95 % (HPLC) und einer Ausbeute von 28,2 kg (98 %) erhalten.

### Beispiel 2:

64,45 g (0,125 mol) der gleichen 3,7-Diazabicyclo[3.3.1]nonane Verbindung wie in Beispiel 1 wurden pulverisiert und in dieser Form in 107,5 g (5,97 mol) Wasser suspendiert. Dann wurden 52,28 g einer 30,2 %igen Eisen(II)chlorid-Lösung zugegeben und die Reaktionsmischung drei Stunden bei Raumtemperatur gerührt. Die feine Suspension des Produktes wurde nun durch Filtration und Trocknung im Vakuumtrockenschrank in ein pulverförmiges gelbes Endprodukt überführt. Man erhielt auf diese Weise in einer Ausbeute von 81 g (98 %) bei einer Reinheit von > 95 % (HPLC) das gleiche Produkt wie in Beispiel 1.

## Patentansprüche

1. Verfahren zur Herstellung von 3,7-Diaza-bicyclo[3.3.1]nonan-Metall-Komplexen der Formel (2)
[MₐLₖZₙ]Yₘ (2)
in der M folgende Metalle repräsentiert: Mn(II)-(III)-(IV), Cu(I)-(II)-(III), Fe(II)-(III)-(IV)-(V) und Co(I)-(II)-(III);
L ist ein Ligand der Formel (1) bzw. seine protonierte oder deprotonierte Form wobei R Wasserstoff, Hydroxyl, C₁-C₄ Alkyl; R¹ C₁-C₄ Alkyl, C₆-C₁₀ Aryl, Pyridinyl-C₁-C₄-alkyl, (CH₂)ₙ₁N(CH₃)₂; R² C₁-C₄ Alkyl, C₆-C₁₀ Aryl; R³C₁-C₄ Alkyl, X C=O oder C(OH)₂ bedeutet, 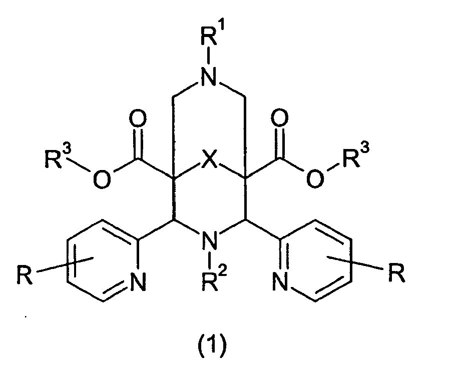
Z ist eine koordinierende Verbindung ausgewählt aus mono, bi oder tri geladenen Anionen oder neutralen Molekülen, die an ein Metall mono, bi oder tridentat koordinieren können, wie z.B.: OH⁻, NO₃⁻, NO, S²⁻, RS⁻, PO₄³⁻, H₂O, CO₃²⁻, ROH, Cl⁻, Br⁻, CN⁻, ClO₄⁻, RCOO⁻, SO₄²⁻;
Y ist ein die Ladung des Komplexes ausgleichendes Anion;
a ist eine ganze Zahl von 1 bis 10, bevorzugt von 1 bis 4;
k ist eine ganze Zahl von 1 bis 10;
n ist eine ganze Zahl von 1 bis 10, bevorzugt von 1 bis 4;
m ist eine ganze Zahl von 1 bis 20, bevorzugt von 1 bis 8;
n1 ist eine ganze Zahl von 1 bis 10;
**dadurch gekennzeichnet, dass** der Ligand L in Wasser gelöst oder suspendiert wird und mit einem Metallsalz komplexiert wird.

2. Verfahren nach Anspruch 1, **dadurch gekennzeichnet, dass** das Metallsalz Fe(II)-chlorid ist.

3. Verfahren nach Anspruch 1 oder 2, **dadurch gekennzeichnet, dass** man Eisen(1+), chloro[dimethyl 9,9-dihydroxy-3-methyl-2,4-di(2-pyridinyl-N)-7-[(2-pyridinyl-N)methyl]-3,7-diazabicyclo[3.3.1]nonane-1,5-dicarboxylate-N3, N7]-, chlorid herstellt.

4. Verfahren nach einem oder mehreren der Ansprüche 1 bis 3, **dadurch gekennzeichnet, dass** das Metallsalz zur Komplexierung des Liganden L entweder als Feststoff oder als wässrige Metallsalz-Lösung zu der wässrigen Lösung oder Suspension des Liganden L zugegeben wird.

5. Verfahren nach einem oder mehreren der Ansprüche 1 bis 4, **dadurch gekennzeichnet, dass** es bei Raumtemperatur durchgeführt wird.

## Claims

1. A method for producing 3,7-diazabicyclo[3.3.1]nonane metal complexes of the formula (2)
[MₐLₖZₙ]Yₘ (2)
in which M represents the following metals: Mn(II)-(III)-(IV), Cu(I)-(II)-(III), Fe(II)-(III)-(IV)-(V) and Co(I)-(II)-(III);
L is a ligand of the formula (1) or its protonated or deprotonated form, where R is hydrogen, hydroxyl, C₁-C₄-alkyl; R¹ is C₁-C₄-alkyl, C₆-C₁₀-aryl, pyridinyl-C₁-C₄-alkyl, (CH₂)ₙ₁N(CH₃)₂; R² is C₁-C₄-alkyl, C₆-C₁₀-aryl; R³ is C₁-C₄-alkyl, X is C=O or C(OH)₂, 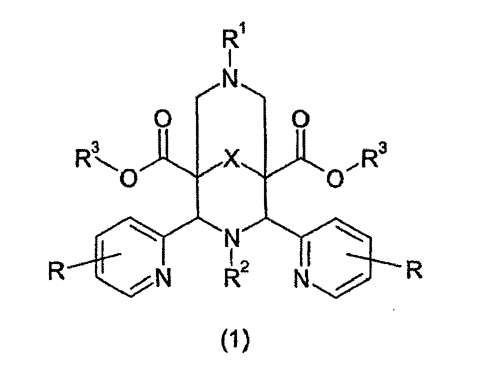
Z is a coordinating compound selected from mono-, bi- or tri-charged anions or neutral molecules which can coordinate to a metal in mono-, bi-or tri-dentate form, such as e.g.: OH⁻, NO₃⁻, NO, S²⁻, RS⁻, PO₄³⁻, H₂O, CO₃²⁻, ROH, Cl⁻, Br⁻, CN⁻, ClO₄⁻, RCOO⁻, SO₄²⁻;
Y is an anion balancing the charge of the complex;
a is an integer from 1 to 10, preferably from 1 to 4;
k is an integer from 1 to 10;
n is an integer from 1 to 10, preferably from 1 to 4;
m is an integer from 1 to 20, preferably from 1 to 8;
n1 is an integer from 1 to 10;
which comprises dissolving or suspending the ligand L in water and complexing it with a metal salt.

2. The method as claimed in claim 1, wherein the metal salt is Fe(II) chloride.

3. The method as claimed in claim 1 or 2, wherein iron(1+), chloro[dimethyl 9,9-dihydroxy-3-methyl-2,4-di(2-pyridinyl-N)-7-[(2-pyridinyl-N)methyl]-3,7-diazabicyclo[3.3.1]nonane-1,5-dicarboxylate-N3, N7]-, chloride is produced.

4. The method as claimed in one or more of claims 1 to 3, wherein the metal salt for complexing the ligand L is added to the aqueous solution or suspension of the ligand L either in the form of a solid or in the form of an aqueous metal salt solution.

5. The method as claimed in one or more of claims 1 to 4, wherein it is carried out at room temperature.

## Revendications

1. Procédé pour la production de complexes de 3,7-diaza-bicyclo[3.3.1]nonane-métal de formule (2)
[MₐLₖZₙ]Yₘ (2)
dans laquelle M représente les métaux suivants: Mn(II)-(III)-(IV), Cu(I)-(II)-(III), Fe(II)-(III)-(IV)-(V) and Co(I)-(II)-(III);
L est un ligand de formule (1) ou sa forme protonée ou déprotonée, R représentant un atome d'hydrogène, le groupe hydroxy, un groupe alkyle en C₁-C₄; R¹ représentant un groupe alkyle en C₁-C₄, aryle en C₆-C₁₀, pyridinyl-alkyle(C₁-C₄), (CH₂)ₙ₁N(CH₃)₂; R² représentant un groupe alkyle en C₁-C₄, aryle en C₆-C₁₀; R³ représentant un groupe alkyle en C₁-C₄, X représentant C=O ou C(OH)₂, 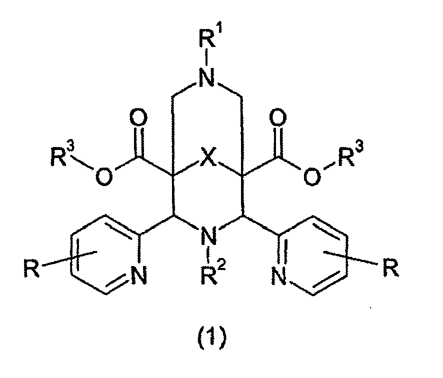
Z est un composé de coordination choisi parmi des anions mono-, bi- ou tri-chargés ou des molécules neutres, qui peuvent se coordiner à un métal mono-, bi- ou tridentate, comme par exemple: OH⁻, NO₃⁻, NO, S²⁻, RS⁻, PO₄³⁻, H₂O, CO₃²⁻, ROH, Cl⁻, Br⁻, CN⁻, ClO₄⁻,RCOO⁻, SO₄²⁻;
Y est un anion compensant la charge du complexe;
a est un nombre entier valant de 1 à 10, de préférence de 1 à 4;
k est un nombre entier valant de 1 à 10;
n est un nombre entier valant de 1 à 10, de préférence de 1 à 4;
m est un nombre entier valant de 1 à 20, de preference de 1 à 8;
n1 est un nombre entier valent de 1 à 10;
**caractérisé en ce qu'**on dissout ou met en suspension dans l'eau le ligand L et on le soumet à une complexation avec un sel métallique.

2. Procédé selon la revendication 1, **caractérisé en ce que** le sel métallique est le chlorure de Fe(II).

3. Procédé selon la revendication 1 ou 2, **caractérisé en ce qu'**on produit du chlorure de chloro[dimethyl-9,9-dihydroxy-3-méthyl-2,4-di(2-pyridinyl-N)-7-[(2-pyridinyl-N)méthyl]-3,7-diazabicyclo[3.3.1]nonane-1,5-dicarboxylate-N3, N7]-fer(1+).

4. Procédé selon une ou plusieurs des revendications 1 à 3, **caractérisé en ce que** pour la complexation du ligand L on ajoute le sel métallique soit sous forme de solide, soit sous forme de solution aqueuse de sel métallique à la suspension ou solution aqueuse du ligand L.

5. Procédé selon une ou plusieurs des revendications 1 à 4, **caractérisé en ce qu'**on l'effectue à la temperature ambiante.
